# EUROPEAN PATENT SPECIFICATION

(11) **EP 2 281 681 B1**
(45) Date of publication and mention of the grant of the patent: **17.10.2018**
(21) Application number: 10171900.3
(22) Date of filing: 04.08.2010
(51) Int. Cl.: B29D 11/00

(54) **Control of Surface Smoothness by Light Orientation**
Steuerung der Oberflächenglätte mittels Lichtausrichtung
Contrôle de la régularité d'une surface par orientation de la lumière

(30) Priority: 04.08.2009 US 213976 P
(43) Date of publication of application: 09.02.2011
(73) Proprietor: FLIR Systems Trading Belgium BVBA, 2321 Meer (BE)
(72) Inventor: Roitman, Daniel, Charlotte, NC 28262 (US); Goyal, Dileep, Charlotte, NC 28262 (US); Tekolste, Bob, Charlotte, NC 28262 (US)
(74) Representative: Zacco Denmark A/S

(56) References cited:
- WO-A1-00/59713
- WO-A1-2004/015481
- WO-A1-2006/012915
- US-A1- 2002 000 680
- US-A1- 2005 104 240
- US-A1- 2008 054 507

## Description

### BACKGROUND

### 1. Field

Embodiments relate to control of surface roughness and patterns by light orientation.

### 2. Description of the Related Art

Generally, an optical device may be formed as a polymer having a predetermined shape by disposing a polymerizable material between opposing substrates, one of which may have a surface with a complementary shape to the predetermined shape, and polymerizing the material.

US 2002/000680 discloses a method and mold assembly to control the polymerization of a molded article. In one embodiment, an amorphous posterior mold comprising a non-critical surface having a controlled radius of curvature is used to produce molded articles. In an alternate embodiment, ophthalmic lenses are produced using a posterior mold in which the concave surface of the non-critical surface is filled with a liquid having a similar refractive index as the mold material.

US2008054507 discloses that a plurality of optical elements can be manufactured by replication. A replication tool can include a plurality of replication sections having negative structural features that define the shape of the plurality of optical elements and at least one first spacer portion. A replication material can be disposed between a substrate and the replication tool. The replication tool and the substrate can be moved so that a substantially flat surface portion of each first spacer portion rests against a layer of replication material remaining between the at least one first spacer portion and the substrate. The layer of replication material keeps the at least one first spacer portion spaced from the substrate. The replication material can be hardened to form the plurality of optical elements.

### SUMMARY

The present invention relates to an apparatus for forming an optical device having a smooth surface according to claim 1 and a method for forming an optical device having a smooth surface according to claim 6.

It is a feature of an embodiment to provide a method and apparatus for forming an optical device having secondary surface features thereon.

It is another feature of an embodiment to provide a method and apparatus for forming an optical device having a smooth surface.

At least one of the above and other features and advantages may be realized by providing a method of forming an optical device having secondary surface features thereon, the method including disposing a photopolymerizable material between a first substrate and a second substrate such that a rear surface of the photopolymerizable material contacts the first substrate and a front surface of the photopolymerizable material contacts the second substrate, the first substrate being a compliant substrate; and irradiating the photopolymerizable material from the front surface thereof using collimated light so as to induce at least partial polymerization of the photopolymerizable material, wherein the secondary surface features are formed at the rear surface of the photopolymerizable material.

The method may further include, after irradiating the photopolymerizable material, performing an annealing operation on the photopolymerizable material.

The collimated light may be passed through a bandpass filter.

The photopolymerizable material may be a fast-curing resin.

The fast-curing resin may be an acrylate resin.

At least one of the above and other features and advantages may also be realized by providing a method of forming an optical device having a smooth surface, the method including disposing a photopolymerizable material between a first substrate and a second substrate such that a rear surface of the photopolymerizable material contacts the first substrate and a front surface of the photopolymerizable material contact the second substrate, the first substrate being a compliant substrate and the second substrate being a rigid substrate; and irradiating the photopolymerizable material from the rear surface thereof using light so as to induce at least partial polymerization of the photopolymerizable material, or irradiating the photopolymerizable material from the front surface thereof using diffused light. The smooth surface may be formed at the rear surface of the photopolymerizable material.

Irradiating the photopolymerizable material from the rear surface may be performed using collimated light.

Irradiating the photopolymerizable material from the rear surface may be performed using diffused light.

The diffused light may be used to partially polymerize the photopolymerizable material, and collimated light may be subsequently used to further polymerize the photopolymerizable material.

At least one of the above and other features and advantages may also be realized by providing an apparatus for forming an optical device having a smooth surface, the apparatus including a first substrate, the first substrate serving as a first surface for polymerization of a photopolymerizable material; and a second substrate, the second substrate being a compliant substrate and serving as a second surface for polymerization of the photopolymerizable material, the first substrate and the second substrate configured to be disposed opposite one another with the photopolymerizable material therebetween and in contact therewith.

When the first and second substrates are disposed such that light from a light source is first incident on the first substrate, the apparatus may further include a diffuser positioned between the light source and the first substrate.

The first substrate may be a compliant substrate.

The first substrate may be a rigid substrate.

When the first and second substrates are disposed such that light from a light source is first incident on the second substrate, the light may be collimated.

The first substrate may be a compliant substrate.

The first substrate may be a rigid substrate.

At least one of the above and other features and advantages may also be realized by providing an apparatus for forming an optical device, the apparatus being configurable in a first configuration to form an optical device having a smooth surface and being configurable in a second configuration to form an optical device having a surface with secondary surface features thereon, the apparatus including a first substrate, the first substrate being a compliant substrate and serving as a first surface for polymerization of a photopolymerizable material; and a second substrate, the second substrate being a rigid substrate and serving as a second surface for polymerization of the photopolymerizable material, the first substrate and the second substrate configured to be disposed opposite one another with the photopolymerizable material therebetween and in contact therewith. In the first configuration, the apparatus may include a diffuser between a light source and the second substrate, the smooth surface of the optical device being formed from the surface of the photopolymerizable material that contacts the first substrate, and, in the second configuration, light from a collimated light source may be configured to irradiate the photopolymerizable material from the surface corresponding to the second substrate, the surface with the secondary surface features thereon corresponding to the surface of the photopolymerizable material that contacts the first substrate.

### BRIEF DESCRIPTION OF THE DRAWINGS

The above and other features and advantages will become more apparent to those of skill in the art by describing in detail example embodiments with reference to the attached drawings, in which:
FIG. 1 illustrates an example orientation of a light source when forming surface features;
FIG. 2 illustrates an example orientation of a light source when forming a smooth surface;
FIG. 3A illustrates an example of suppressing surface features using a diffuser;
FIG. 3B illustrates another example of suppressing surface features using a diffuser;
FIG. 4A illustrates increases in the amplitude of surface features using a relatively low dose of light;
FIG. 4B illustrates the orientation and nature of light used in connection with Tables 1 and 2;
FIG. 5 illustrates increases in amplitude and roughness resulting from an annealing operation;
FIG. 6 illustrates increases in amplitude and roughness resulting from use of a bandpass filter;
FIG. 7 illustrates increases in wavelength, amplitude, and roughness of surface features when a relatively thick layer of photopolymerizable material is used; and
FIGS. 8A-8S illustrate experimental details according to embodiments.

### DETAILED DESCRIPTION

Example embodiments will now be described more fully hereinafter with reference to the accompanying drawings; however, they may be embodied in different forms and should not be construed as limited to the embodiments set forth herein.

In the drawing figures, dimensions may be exaggerated for clarity of illustration. It will be understood that when an element is referred to as being "on" another element, it can be directly on the other element, or one or more intervening elements may also be present. It will also be understood that when an element is referred to as being "under" another element, it can be directly under, or one or more intervening elements may also be present. It will also be understood that when an element is referred to as being "between" two elements, it can be the only element between the two elements, or one or more intervening elements may also be present. Like reference numerals refer to like elements throughout.

As used here, the term photopolymerizable material refers to a material that can be polymerized by exposure to radiation such as light, etc.

An embodiment relates to a method for controlling surface features, e.g., surface roughness and/or surface patterns, on a photopolymerized film or device, e.g., a lens. As described in detail herein, the surface features of a one-sided or two-sided substrate-supported photopolymerized film or device (lens) may be controlled by the orientation, nature, intensity, or dose of the photopolymerization light in relation to the substrates, and/or by the angle of entry of the light in relation to the surface of the substrate. In addition, surface feature control may be effected, at least in part, by varying the mechanical characteristics of the substrates. Simple orientation of light sources and distributions of light incident angles may be used to generate or suppress surface features. Thus, the method may be used to control the formation of features on a surface or on surfaces on the photopolymerized materials. Visualization of the surface features may be performed using, e.g., white light interferometry.

A substrate may be made of any of a variety of materials capable of providing sufficient structural detail for the micro-optical device and sufficient durability for multiple uses. For example, the master may be made of a material having some elasticity, but sufficient mechanical strength, e.g., polydimethylsiloxane (PDMS) or a fluorinated or perfluorinated organic compound such as Teflon.

A replication material may be a deformable but curable material, e.g., heat curable or ultraviolet (UV) curable. Examples of replication materials include UV curable polymers, UV curable monomers, and composite materials, e.g., sol-gel. In an implementation, a UV-curable polymer material such as a fast-curing acrylate resin, e.g., Ormocomp, may be used.

Embodiments may employ a photopolymerizable resin formulated as a liquid that contains a photoinitiator (PI). The PI may be a compound or moiety that absorbs light and converts its energy into reactive species (e.g., radicals or acids) capable of initiating the conversion of liquid monomers of the resin into linear polymers or crosslinked networks. The PI absorbs light. Thus, the intensity of light may decay exponentially as it propagates through the photopolymerizable resin. According to an embodiment, this intensity gradient may be used to generate polymerization or reaction gradients across the photopolymerizable resin. More particularly, the photopolymerizable resin may be caused to polymerize faster on the surface that is on the side of the lamp, and slower or later on the back surface (away from the light source). Such a top-to-bottom polymerization gradient may lead to other processes such as temperature gradients and monomer diffusion gradients. The polymerization gradient may also lead to convective patterns in the un-gelled material.

Without being bound by theory, it is believed that photopolymerization anisotropy across the thickness of the film may underlie the surface finish effects (roughness or patterns) on the downstream side of the films that may be provided according to an embodiment (as used herein, the terms "upstream" and "downstream" mean that a collimated light source is located either at the entrance or the exit of the photopolymerizable resin, respectively). Thus, frontal or wavelike photopolymerization effects may generate downstream stress instabilities in the polymer structures, e.g., lenses, films, etc., resulting from the polymerization, particularly when combined with strong dimensional changes (shrinkage) in the photopolymerizable material.

According to an embodiment, the materials or substrates (such as stamps or molds) that are used to bound the resin may be selected based on a desired morphology of the surface finish of the photopolymerized material. In this regard, the materials or substrates, either upstream or downstream, may have strong effects on the morphology of the surface finish of the photopolymerized material.

In an example, the compliant substrate may be an elastomer with low modulus (e.g., about 0.5 to about 20 MPa), in which case the resultant patterns may be relatively periodic structures of ridges and valleys, or dimples. For example, PDMS having a modulus of about 3 MPa may be used as a compliant substrate. The compliant substrate may be formed to have a predetermined shape or surface curvature, e.g., to form a side of a lens.

In another example, the downstream material may be a gas or, in another implementation, a liquid, in which case dimples may be formed as depressions with a more or less random pattern. In the former case the surface of the resin may have an opalescent appearance; in the latter case it may have a cloudy appearance.

In another example, the downstream substrate may be a rigid material (e.g., a material having a modulus of greater than 100 MPa), in which case the patterns may be similar to those formed when using the elastomer but their amplitudes (peak to valley heights) may be suppressed. In this case the patterns may be very fine, For example, the texture may become nearly invisible under usual illumination, and even under microscope inspection.

According to an embodiment, the angle of incidence of a collimated light source may be used in controlling the organization of dimples, valleys, and/or ridges on the surface of a film or device. For example, the light may be tilted towards angles greater than 90 degrees (glancing angles) to generate patterns that resemble an ordered arrays of ridges. Further, the orientation of the ridges may be controlled by controlling the lamp orientation.

In an embodiment, molds or substrates made from elastomers may be used in the fabrication of microlenses. A random distribution of incident angles may be generated by converting the collimated light into a Lambertian-like emissive surface, instead of tilting the collimated light into a single angle, in which case the surface patterns may be caused to disappear. Without being bound by theory, it is believed that this is due to the superposition of an effectively infinite number of randomly oriented patterns. Thus, the Lambertian source (diffuser) may be used for the fabrication of photoreplicated films or devices, e.g., lenses, that require a smooth and uniform surface finish. Thus, the surface texture of a lens fabricated by photopolymerization using an elastomeric mold may be controlled or affected by inserting a diffuser in the path of a collimated light source, This type of illumination may be especially useful if elastomers are used as molding materials.

### Formation of Surface Features

In an embodiment, surface features of a photo-replicated device (e.g., a lens) or film may be formed by controlling the orientation of a light source relative to the substrate(s) used to contain the photopolymerizable material.

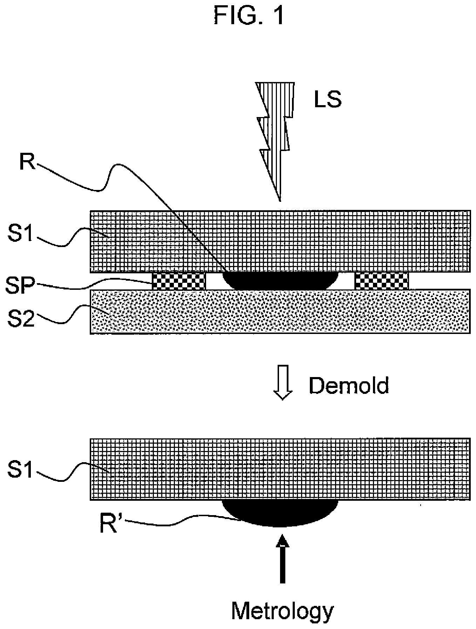

For example, referring to FIG. 1, a replication material, e.g., a photopolymerizable resin R, may be sandwiched between a rigid substrate S1, e.g., a glass substrate, and a compliant substrate S2, e.g., an elastomeric surface, and the orientation of the light source LS may be such that the light is irradiated from the rigid substrate side. The resultant polymer R' (which may be a fully or partially cured film, a replicated device such as a lens, etc.) may exhibit features on the surface that is in contact with the compliant substrate S2, e.g., the elastomer. This results in a finish referred to herein as "orange skin" (OS) or "alligator skin." The surface features may have varying degrees of regularity, and may be in the form of random ridges and/or dimples, etc. In an implementation, the surface features may form a secondary pattern or microstructure on an optical device. For example, the OS may generate diffractive patterns that may be used to alter or adjust the performance of a film, device, etc.

In another embodiment, surface features may be formed by controlling the angle of a collimated light source.

For example, the angle of the light source with respect to the stack of the rigid substrate S1/photopolymerizable resin R/compliant substrate S2 may be controlled to be off-axis, i.e., at an angle that differs from the normal to the rigid substrate S1, in which case the surface texture of the cured resin that is in contact with the compliant substrate may be formed to have periodic oriented structures (ridges).

In another embodiment, surface features may be formed by controlling the nature of the light source.

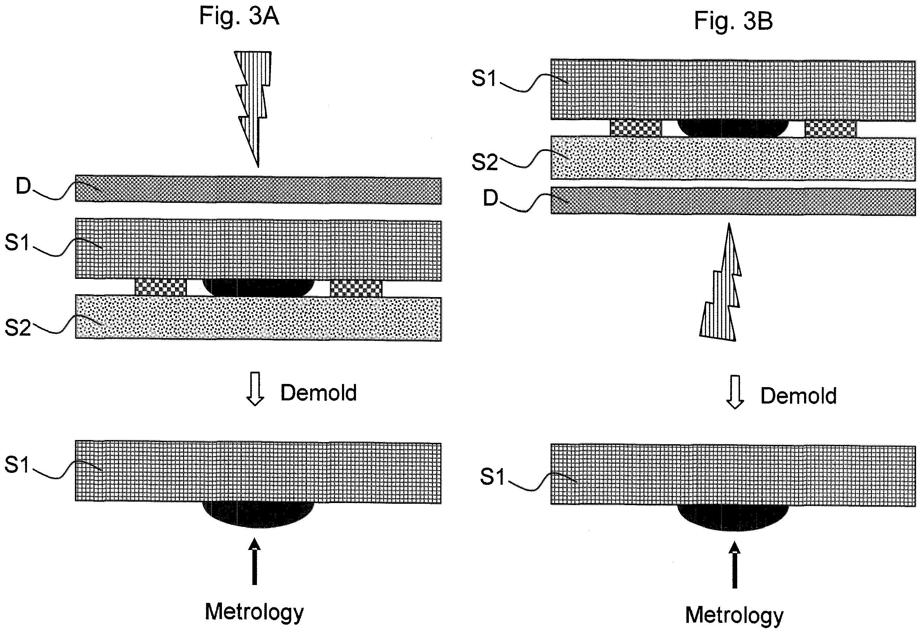

For example, the use of a highly collimated light source may increase the surface features, while the use of a less poorly defined collimated light source may produce lesser features. In contrast, in another embodiment described below in connection with FIG. 3A, a diffuser may be used to generate a diffused light beam to suppress surface features.

In another embodiment, surface features may be increased by reducing the dose of light source and/or increasing the power of the light source.

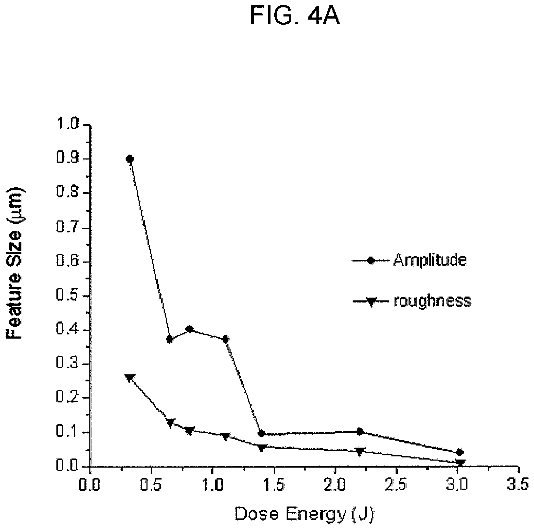

For example, referring to FIG. 4A, larger feature sizes and/or greater surface roughness may be generated by using a relatively low dose of light, e.g., by using a relatively short exposure time (in FIG. 4A, the dose was controlled by exposure time). As the effect of total energy (50/50 masked/unmasked) decreases, however, the features sizes and surface roughness may decrease.

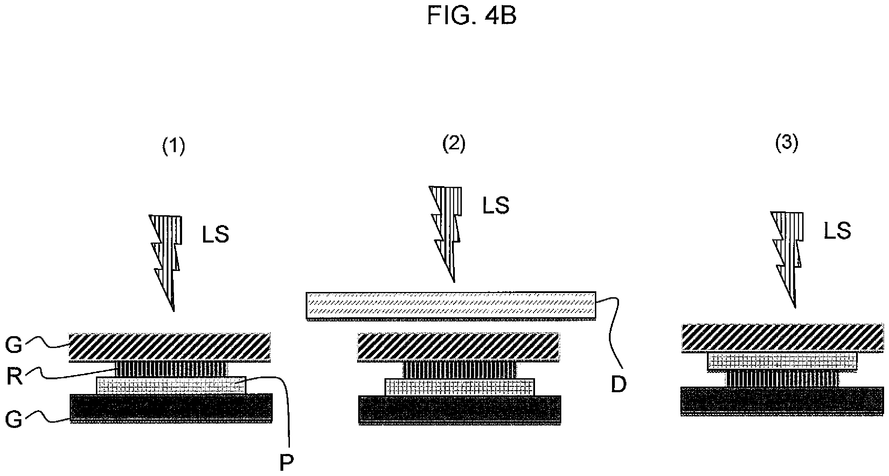

Further, referring to FIG. 4B and Tables 1 and 2, a relatively high power light may increase the amplitude of the surface features. As a specific example, low intensity (0.5 mw/cm²) collimated illumination generated surface features having a larger amplitude that surface features formed using higher intensity (5.5 mw/cm²) light. As another specific example, using a configuration as illustrated in FIG. 1, with a compliant stamp (formed of PDMS - polydimethylsiloxane) opposite the light source and a rigid substrate (glass) proximate to the light source, increasing the power of a xenon lamp from 5 mw/cm² to 20 mw/cm² increased the rms surface roughness from about 4.5 nm to about 19 nm when using Ormocomp as the photopolymerizable material.

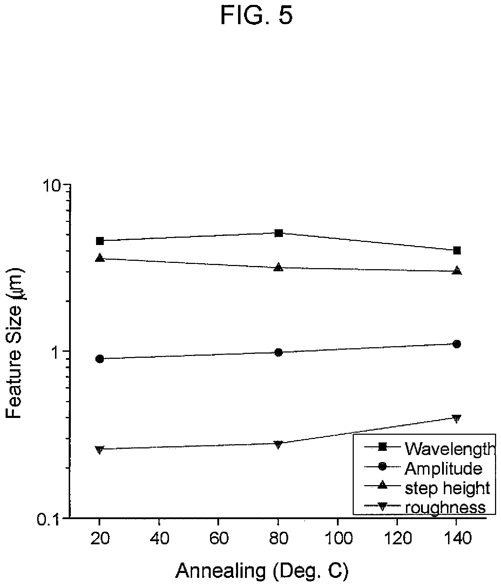

Further, referring to FIG. 5, an annealing operation may be performed to further increase the amplitude and/or roughness of surface features. As shown in the log-scale graph of annealing effects in FIG. 5 (initial UV exposure 0.32 J), amplitude and roughness may be increased by irradiating the photopolymerizable resin R at a relatively low dose and then performing the annealing operation. At the same time, the wavelength and step height of surface features may increase or decrease.

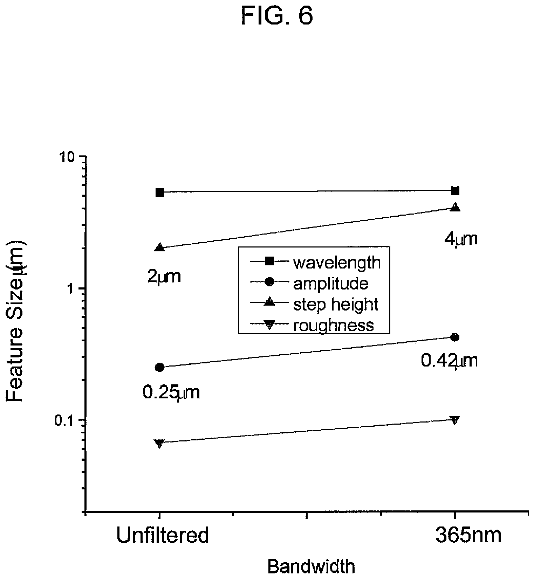

Referring to FIG. 6, it may also be possible to increase the amplitude and/or roughness of surface features by controlling the wavelength(s) of the light source. The light filtering effect investigated in FIG. 6 illustrates how amplitude and surface roughness of surface features increased when the bandwidth of the light source was reduced by using a relatively narrow 360 nm bandpass filter to limit the wavelengths of light irradiating the photopolymerizable resin R, in this case a hybrid organic-inorganic photopolymerizable resin marketed as "Ormocomp." In the example shown in FIG. 6, the filter resulted in a decrease in light power of the Xenon lamp by a factor of about 15 (5.7 mW/cm² to 0.37 mW/cm²). In an effort to compensate for the lower power, the exposure time was increased (from 240 s (unfiltered) to 3,700 s (with filter)).

In another embodiment, surface features may be increased by increasing the thickness of the photopolymerizable material.

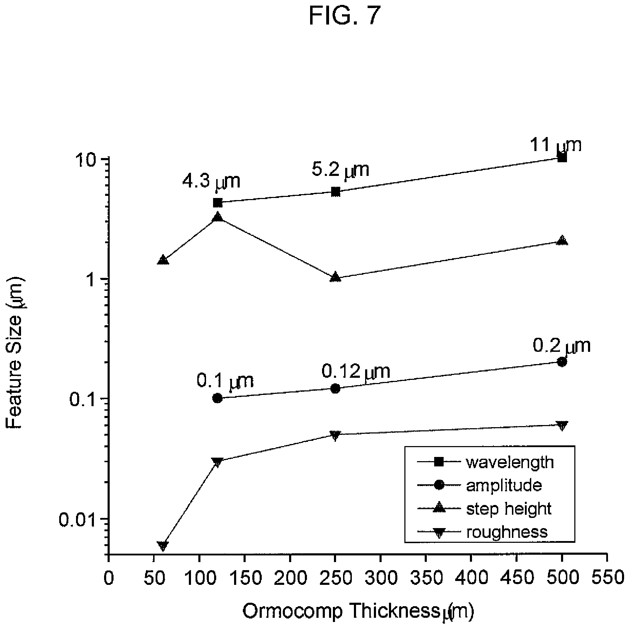

For example, referring to FIG. 7, illustrating the effect of Ormocomp thickness (PDMS: 500 µm), wavelength, amplitude, and roughness of surface features may be increased by using a relatively thick layer of photopolymerizable material.

In another embodiment, the photopolymerizable resin R may be cast on a rigid substrate as a free-flowing film (not shown) and photopolymerized with a collimated light from the glass side, in which case the film may appear cloudy as a result of dimples formed on the surface of the film. In contrast, if the film is photopolymerized with the light striking the surface of the photopolymerizable resin R from the resin side, the cured film may have a smooth surface devoid of dimples, and the film may appear transparent and not cloudy.

In another embodiment, surface features may be increased by increasing the amount of photoinitiator in the photopolymerizable material.

For example, the concentration of photoinitiator in the photopolymerizable material may be increased so as to increase a polymerization gradient during photopolymerization. This may accentuate the asymmetric nature of the polymerization and increase the amplitude of resultant surface features.

As described above, surface features of a photo-replicated device (e.g., a lens) or film may be formed by controlling the orientation of a light source relative to the substrate(s) used to contain the photopolymerizable material. A related but different effect may be generated to pattern holographic information on photopolymerizable films. The difference between the embodiments described above and photo-holography is that, in holography, the spatial intensity of the light is modulated using masks or interference patterns, which may be complex and expensive to produce. In contrast, according to embodiments, the film morphology may be controlled by virtue of the light angle of incidence (and the distribution of angles of incidence) relative to a "sandwich" of the photopolymerizable material, and by the mechanical characteristics of the materials that bound the photopolymerizable material in the sandwich (rigid glass, elastomer, or gas) during photopolymerization.

### Formation of Smooth Surfaces

Embodiments may also be used to suppress surface features so as to form a smooth surface. In this regard, as a practical matter light cannot be always controlled in a simple upstream-downstream manner, since the surfaces of the substrates may be coated with reflective metals. Multiple reflections may also arise from glass-air interfaces or other interfaces where materials of different refractive indexes meet. Thus, it is not always feasible to control the surface finish of the surface of the polymer by simply placing the compliant substrate upstream to the collimated light source.

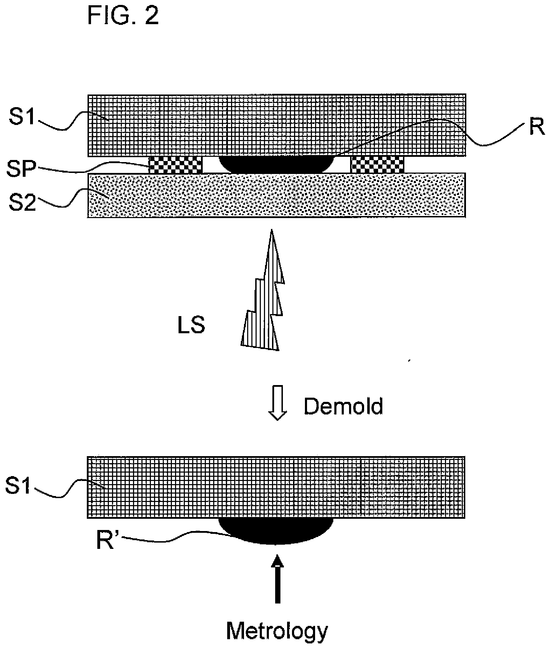

For example, referring to FIG. 2, the stack of the rigid substrate S1/photopolymerizable resin R/compliant substrate S2 may be illuminated with the light source LS oriented to impinge on the photopolymerizable resin R from the compliant substrate side, in which case the surface of the polymer S', i.e., the photopolymerized resin, that was in contact with the compliant substrate S2 may be made smooth, i.e., ripples or dimples may be suppressed. Thus, in contrast to the example described above in connection with FIG. 1, the present example may be used where it is desired to control surface morphology so as to suppress roughness and/or patterns on the surface of a photopolymerized film or device that was in contact with the compliant substrate S2.

In another embodiment, surface features may be suppressed by controlling the nature of the light source.

For example, referring to FIG. 3A, the angles of incidence of light emitted by the light source and impinging on the photopolymerizable resin R may be randomized by inserting a diffuser D between the light source LS and the rigid substrate S1, in which case the surface of the polymer R' in contact with the compliant substrate S2 may be made smooth and devoid of dimples. Thus, relative to the example described above in connection with FIG. 1, roughness and/or patterns may be suppressed even while illuminating the stack from the rigid substrate side.

In another example, the amplitude and/or roughness of the features may be reduced by increasing the dose, e.g., by using a longer exposure time or a more intense light, if desired. More particularly, referring to FIGS. 3A, 3B, and 4A, the surface roughness and/or amplitude of patterns maybe suppressed even when using a relatively low dose of light. For example, irradiation of the photopolymerizable resin R may include a first irradiation and a second irradiation, the first irradiation being performed using the diffuser D and the second irradiation being performed without the diffuser D. It will be appreciated that the diffuser D may reduce the overall intensity of the light source. As described above in connection with Tables 1 and 2, lowering the intensity of the light source may have a tendency to increase the surface roughness and/or amplitude of surface features. However, as described above in connection with FIGS. 3A and 3B, the diffuser D may suppress roughness and amplitude of surface features. Further, the suppressive effects of the diffuser D may obviate the tendency of low intensity light to increase such characteristics. Thus, the diffuser D may be enable the suppression of surface roughness and amplitude of surface features, i.e., the fabrication of smooth surfaces, even when using low intensity illumination. This may allow for the formation of smooth surfaces using relatively low-cost equipment and/or facilitate the fabrication of larger-area devices and/or films without necessitating increases in the power of the light source used therefor. Further, the use of a low power light source may avoid inducing bubbles in the resin during polymerization.

In another example, referring to FIG. 3B, the diffuser D may be inserted between the light source LS and the compliant substrate S2, while illuminating the stack from the compliant substrate side, in which case the surface of the polymer R' in contact with the compliant substrate S2 may again be made smooth and devoid of wrinkles. Thus, regardless of whether the light source LS was incident on the rigid substrate S1 or on the compliant substrate S2, the polymer R' may be formed with a smooth and transparent appearance by using the diffuser D.

In another embodiment, surface features may be suppressed by controlling the dose of light.

For example, surface features may be suppressed by using a relatively high dose of light, e.g., by using a relatively long exposure time. As a specific example, orange skin having an amplitude of about 1 µm was generated at a dose of 0.3 J, whereas a dose of 1.5 J generated an amplitude of only 0.1 µm. In this regard, a lower power light source may also help suppress surface features, as indicated in Tables 1 and 2 in connection with polymerization of Ormocomp at decreasing powers of 20, 10, and 5 mw/cm².

An embodiment relates to reducing dimples or surface roughness in the replication of relatively thick films or devices, e.g., lenses. The polymerization gradients may be small for thin films (i.e., films of about 50 microns or less) with typical photoinitiator concentrations (such concentrations being typically less than 2%). Thus, the patterns may be barely noticeable for thin films. However as film thickness increase (i.e., films of greater than 50 microns) the patterns are noticeable by the naked eye or to inspection microscopy. Thus, the present embodiment may be particularly useful for reducing dimples or surface roughness in the replication of relatively thick films or devices, e.g., lenses.

As described above, embodiments may be used to suppress surface features so as to form a smooth surface. Where a smooth surface is required, e.g., a smooth-surfaced lens several millimeters wide, the failure to suppress surface features may have significant negative impact on device yield. For example, a halo of stray light may be produced by a lens, which may render the lens unusable and reduce device yields.

### Experiments

Referring to Tables 1 and 2 and FIG. 4B, experiments were performed to compare two photopolymerizable materials, namely, Ormocomp and CPS2. The experiments are provided in order to set forth particular details of one or more example embodiments. However, it will be understood that example embodiments are not limited to the particular details described in the experiments, nor are comparative examples to be construed as either limiting the scope of the invention or as necessarily being outside the scope of the invention in every respect.

In FIG. 4B, (1) was performed using collimated UV light as a light source (LS) with PDMS (P) on the bottom of the photopolymerizable material (i.e., PDMS was opposite the light source LS) and glass substrates (G) above and below, and orange skin was formed upon photopolymerization of the UV resin (R); (2) was performed using a diffuser with PDMS on the bottom, and no orange skin was formed; (3) was performed using collimated UV light with PDMS on the top of the UV resin R, and no orange skin was formed. The investigation was performed using a Zygo Profilometer with Mirau 20X (0.5X) objective.

**Table 1**

| Mat'l | Lamp, Power mW/cm² | Stamp down, no diffuser rms (nm) | 2D-Pattern (λ, in µm) | Stamp down, with diffuser rms (nm) | Pattern | Stamp up, no diffuser rms (nm) | Pattern |
|---|---|---|---|---|---|---|---|
| O | Xe, 5 | 4.5±2 | periodic (8.5) | 2±1 | smooth | 1.0 | smooth |
| O | Xe, 10 | 10.5±1 | periodic (12.6) | 1.1±0.3 | smooth | 1.3±0.5 | faint periodic |
| O | Xe, 20 | 19±2 | periodic (12-13) | 1.3±0.5 | smooth | 1.6±0.6 | smooth |
| C | Xe, 5 | 25±12 | granular | 4±2 | smooth-dimples | NA | NA |
| C | Xe, 10 | 51±16 | granular + dimples | 2.4±0.7 | smooth-dimples | 3.5±0.5 | smooth-pockmarked |
| C | Xe, 20 | 42±16 | granular + dimples | 2.5±0.8 | Smooth-dimples | NA | NA |
| L | Xe, 10 | 5±2.6 | smooth + dimples | NA | NA | 1.9±0.8 | smooth |

| | | | | | | | |
|---|---|---|---|---|---|---|---|
| Notes: Typical rms roughness, 100 micron probe. Xe lamp (Asahi SpectraMax 302). Materials: O = Ormocomp, C = CPS2, L = LCVGA. | | | | | | | |

**Table 2**

| Mat'l | Lamp, Power mW/cm² | Stamp down, no diffuser rms (nm) | 2D-Pattern (λ, in µm) | Stamp down, with diffuser rms (nm) | 2D-Pattern |
|---|---|---|---|---|---|
| O | Hg, 10 | 6±2 | smooth | 2±1 | smooth |
| O | Hg, 20 | 15±4 | periodic /granular (8) | 2.3±2 | smooth |
| O | Hg, 40 | 23±7 | periodic (7.4) | 5±2.5 | smooth |
| C | Hg, 10 | 33±8 | granular | 3±1 | Smooth-pockmarked |
| C | Hg, 20 | 19±2 | none | 3±1.5 | Smooth-pockmarked |
| C | Hg, 40 | 20±5 | none | 4±2 | Smooth-pockmarked |

| | | | | | |
|---|---|---|---|---|---|
| Notes: Typical rms roughness, 100 micron probe. Hg lamp (Omnicure 2000). Materials: O = Ormocomp, C = CPS2, L = LCVGA. | | | | | |

Referring to Tables 1 and 2, at least three UV-curable acrylate resins (Ormocomp, CPS2, LCVGA) used for replication with PDMS stampers exhibited 2D-roughness or 2D-topographic features when: (a) the stamper was at the opposite (or distal) side of the light source; (b) the light was well-collimated at the stamper surface; (c) the plane of the sample was perpendicular (normal) to the light source.

At least four distinct defects or morphologies may contribute to "orange skin": 1 - "high frequency" (ca. 5-15 µm period) ordered pattern (example: Ormocomp); 2 - "high frequency" (ca. 5-15 µm period) disordered ("granular") pattern (example: CPS2); 3 - low frequency (ca. 30-200 µm spacing) wells or "dimples" ∼30-150 µm in diameter and 150 nm to 1,000 nm deep (examples: LCVGA and CPS2); 4 - low to medium frequency "pockmarks" ∼10-30 µm diameter, ∼30-150 µm deep (CPS2).

The orange skin effect or surface roughness may be highly suppressed when the light source is distal to the stamper, and/or when a diffuser is used to reduce or eliminate light collimation. The extent, e.g., amplitude, and morphology of the surface features may be varied by changing the resin. For example, pockmarks may be observed for CPS2 even if a diffuser is used, and when the stamper is proximal to the light source. As another example, Ormocomp orange skin may exhibit longer range order than either CPS2 or LCVGA. Further, suppression of surface features may also be achieved by varying the resin. For example, at least one epoxy-based resin (Delo 11021) was not seen to exhibit orange skin under Xe lamp at 10 mW/cm².

Lamp Effects: increasing power (Xe lamp) generally increased surface roughness (orange skin). Light collimation appears to have a significant effect on the formation or suppression of surface features. In this regard, poor optical collimation (using the Hg lamp) resulted in decreased orange skin formation.

Materials Effects: CPS2 produced some degree of "dimpled" or pockmarked surfaces under all investigated lighting arrangements. LCVGA (thiol-ene) also exhibited a tendency to form dimples or pockmarked surfaces, but less extensively than CPS2. One epoxy resin, Delo 11021, showed no evidence of orange skin formation. Epoxies are notoriously slow (requiring > 4J), as compared with acrylates (< 2J) to cure. Thus, the slow photospeed of the Delo 11021 may have been a significant factor in suppressing orange skin generation. Additional factors, such as the possible role of oxygen inhibition and atmospheric environment (O₂ vs. N₂) may have some effect, but were not investigated.

Ormocomp is a proprietary UV-curable acrylate sol-gel hybrid resin from Microresist Technology (Berlin, Germany). CPS2 is a proprietary UV-curable acrylate resin from "Colorado Polymer Solutions" (Boulder, Colorado). LCVGA is an acrylate-thiol resin from Tessera that includes the diacrylate TCDDA (tricyclo[5.2.1.0]decane dimethanol diacrylate, CAS# 42594-17-2) and tetrathiol "4T" (pentaerythritol tetrakis(3-mercaptopropionate), CAS# 7575-23-7) in a proportion 3.5 equivalents of acrylate groups to one equivalent of thiol. The resin also contains 0.5 w% of the photoinitiator Irgacure 184. Delo 11021 is an epoxy photocationic UV resin manufactured by Delo Industrial Adhesives (Windach, Germany).

Of the two photopolymerizable materials, CPS2 had a lower viscosity than ORMOCOMP, which may explain some of the differences in the morphology. The CPS2 was much less viscous than Ormocomp (0.32 Pa.s vs. 1.2 Pa.s) (the Delo epoxy had a viscosity of 6.5 Pa.s). The curing speed of both resins was comparable, about 1-2 minutes under UV flux of about 10 mW/cm²).

In Tables 1 and 2, "rms" is the root mean square roughness measured along 100 µm lines. Several readings (5 readings) were taken in relatively flat areas of each surface. The data shown in Tables 1 and 2 was obtained using xenon (Xe) lamp, an Asahi Spectra 302. Orange skin when a Hg lamp (Omnicure 2000) was used (not shown).

Both Ormocomp and CPS2 exhibited orange skin under collimated UV light when the compliant substrate (which may be, e.g., a replicant-forming mold or stamp) was distal to the light source, i.e., as shown in FIG. 1 and in the left side of FIG. 4B.

As indicated in Tables 1 and 2, controlling the lamp power may be used to effect significant surface features. For example, low powers lead to relatively small orange skin. As the lamp power was increased, the Ormocomp exhibited increasing roughness. The CPS2 also exhibited increases between 5 and 10 mW/cm². However, the CPS2 remained relatively constant (to the results obtained at 10 mW/cm²) under 20 mW/cm². Ormocomp was also more regular, showing long range lattice-like patterns with a characteristic wavelength (lambda). CPS2, on the other hand, was more granular, less ordered, and the surface roughness was noisier.

Referring to FIGS. 3A and Tables 1 and 2, the effects of the diffuser D are again evident. As indicated in Tables 1 and 2, both resins became smooth with the diffuser intercepting the collimated light-path. However, even with the diffuser, CPS2 exhibited wells or pinholes (about 1-20 µm diameter and about 70-200 nm deep).

The quality of collimation may also be used to effect control over the formation of surface features. Poorly defined collimated beams may behave in between a good collimated beam (i.e., forming orange skin) and a diffused beam (suppressing orange skin). This effect was observed with a Hg lamp and two different focusing optics, one of good quality and the other less so.

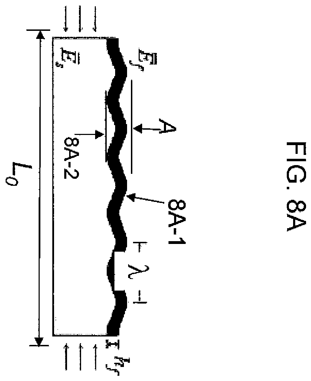

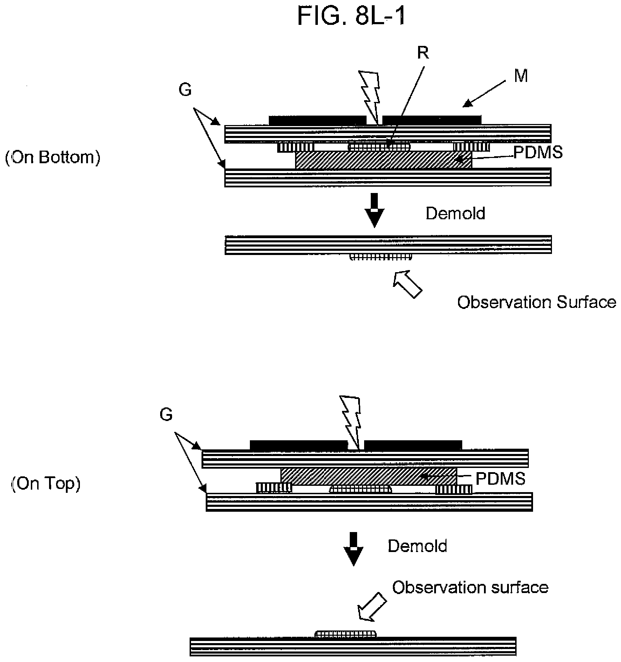

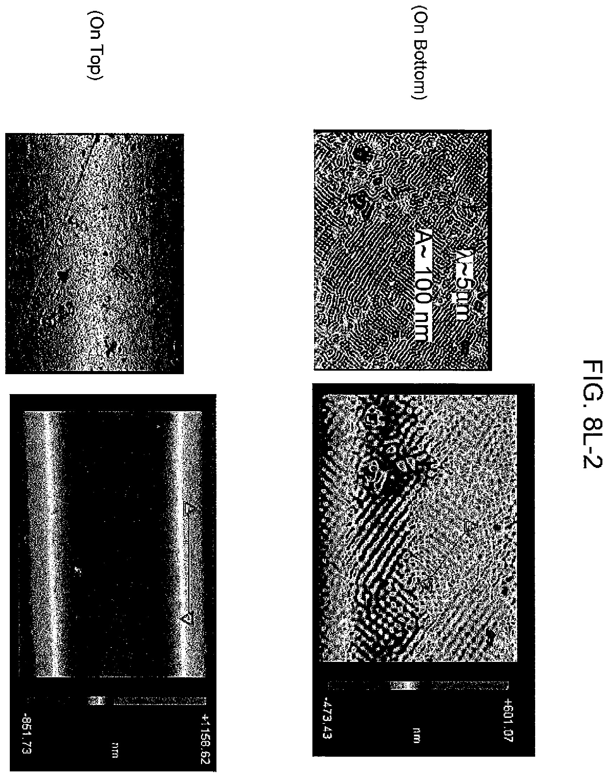

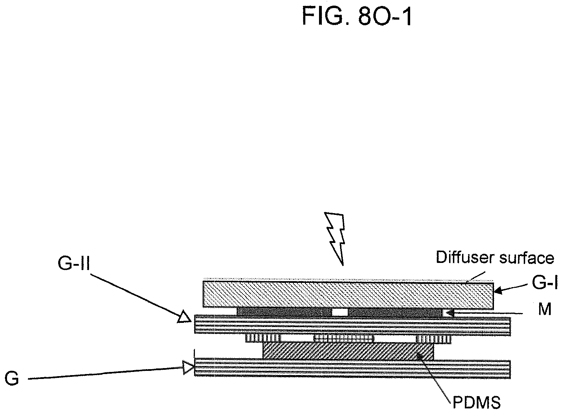

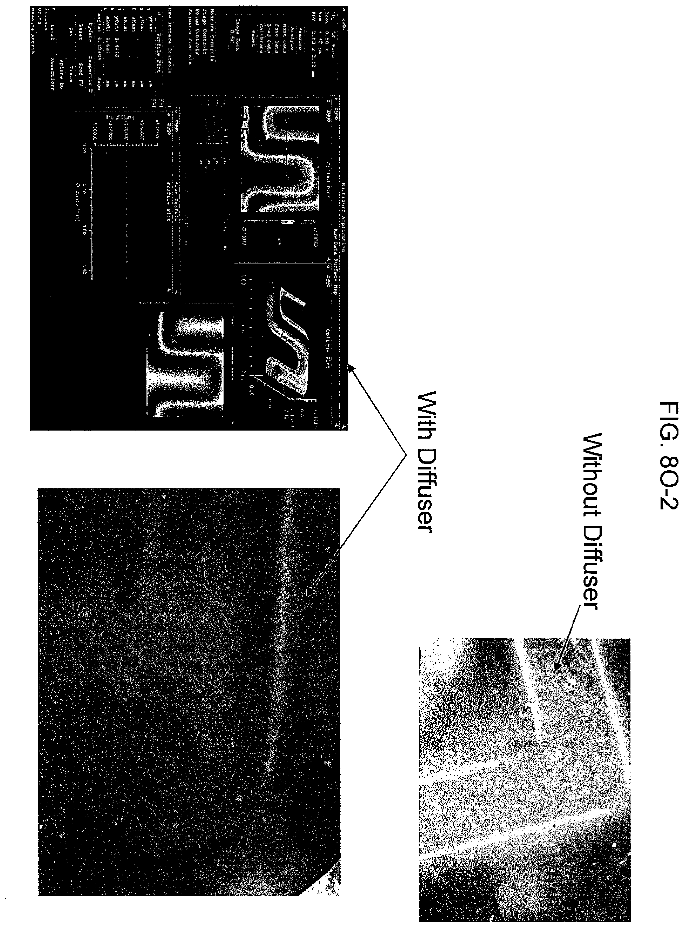

Additionally, FIGS. 8A-8U illustrate results of experiments conducted according to one or more of the above-described embodiments.

Referring to FIGS. 8A-8U, it can be seen that orange skin was generated very early during UV curing (0.3 J), when A is highest (A ∼1 mm) and "flattens" (A∼0.1 mm) as curing advances (1.5 J). When wrinkles were formed, wrinkle wavelength λ appeared to be independent of curing kinetics or UV dose; λ, ξ, and *A* were independent of PDMS thickness; and λ and *A* increased 2X as Ormocomp thickness increased from 250 mm to 500 mm.

Additionally, wrinkle amplitude was determined by the place of PDMS in the stack. Shallow wrinkles (A ∼10 nm) were observed when no PDMS was present.

Without being abound by theory, there is strong evidence that the phenomenon is caused by "frontal polymerization" profiles across the polymer film. This hypothesis may explain wrinkle suppression using a "diffuser" inserted in the light path, thickness effects, and mirror effects in Cr-coated wafers.

FIG. 8A illustrates one approach to skin wrinkle theory predictions. In FIG. 8A, '8A-1' indicates a hard "skin" (e.g., 1 GPa), and '8A-2' indicates a soft support (e.g., 2 MPa), and compressive strain η∼(L₀-L)/L₀.

In the wrinkle theory prediction:
λ ∼ h_{f}(E_{f}/Eₛ)^{1/3}, independent of soft support thickness, weak function of stiffness ratio η∼(E_{f}-Eₛ (λ∼5 µm);
Persistence length ξ ∼ λ*η*^{2/3} independent of soft support thickness, proportional to stiffness ratio (ξ ∼ 36 µm);
Amplitude A ∼ λΔ^{1/2} is a weak function of strain;
Modulus of the "skin": E_{f}, v_{f}, Poisson ratio;
Modulus of the support: Eₛ, vₛ Poisson ratio;
Thickness of the "skin": h_{f}.

Model example: wavelength λ = 2πh_{f}[(E_{f}/3Eₛ)(1-vₛ²)/(1-v_{f}²)]^{1/3}. Hard skin E_{f} ∼ 2x10³ MPa; soft base Eₛ ∼ 2 MPa; *η* ∼ 350; λ ∼ 5.2 µm -> h_{f} ∼ 120 nm; the hard skin is typically much thinner than the soft base. Amplitude A ∼ λΔ^{1/2}. Example: A ∼ 0.15*^{η}* µm, Δ corresponds to ∼0.1% strain; persistence length ξ ∼ λ*η*^{2/3} ξ ∼ (350)^{1/3} ∼ 36 µm. In the model, wavelength λ and persistence length ξ are independent of thickness of soft base (assumed >> h_{f}) and "strain", only amplitude is related to strain.

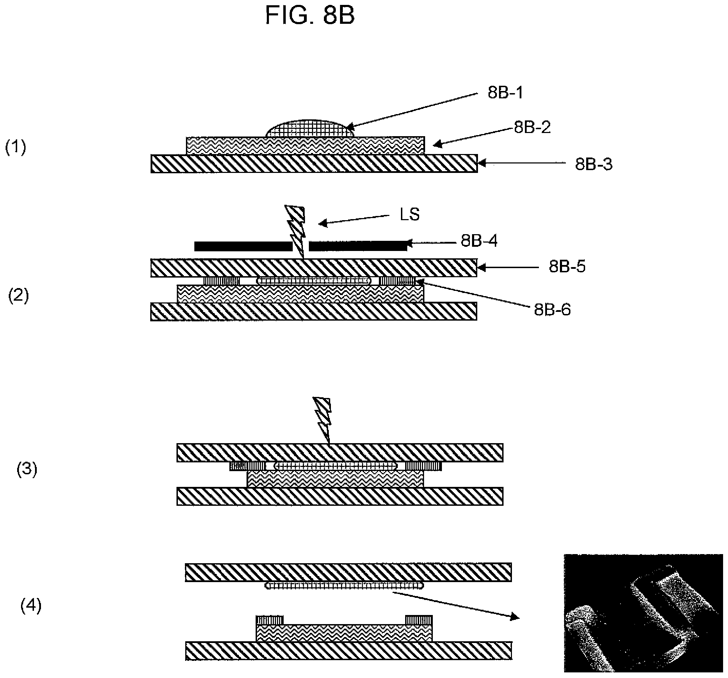

FIG. 8B illustrates a representative patterning process of (1) resin dispensing, (2) exposure #1 (using compliant surface and UV masking; broad-band light source (mercury or xenon)), (3) exposure #2 (no mask), and (4) separation and inspection (typically, bottom surface). Other patterning possibilities include direct beam spatial and intensity modulation, and reflective backplane pattern. In FIG. 8B, '8B-1' indicates a photopolymerizable material, e.g., Ormocomp, etc., '8B-2' indicates a compliant substrate, e.g., PDMS, '8B-3' indicates a backplane, '8B-4' indicates an optical mask, '8B-5' indicates a transparent substrate, and '8B-6' indicates a spacer, which may be formed of, e.g., Kapton.

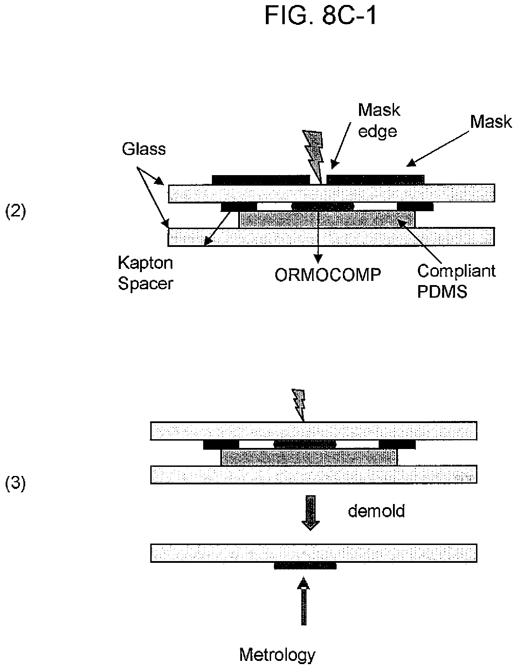

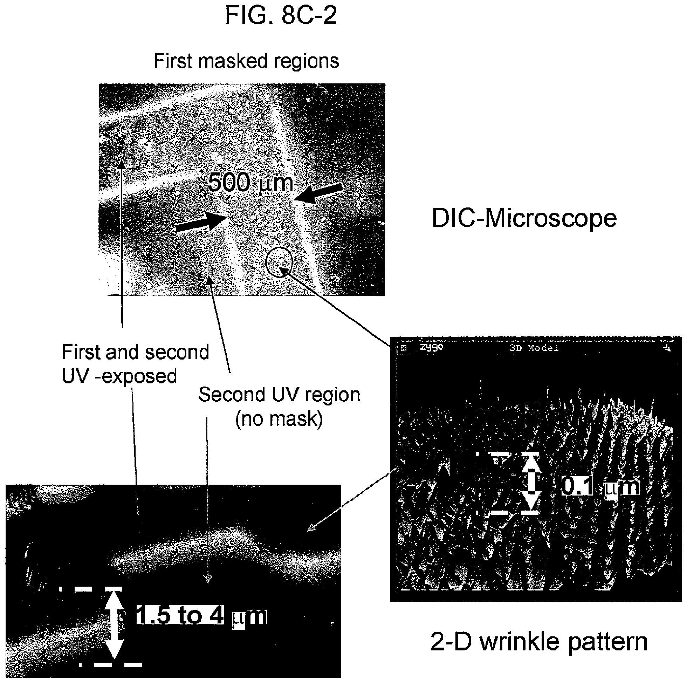

FIG. 8C-1 illustrates pattern formation of a photopolymerizable material (e.g., Ormocomp, ca. 250 mm) using a one-sided compliant substrate (opposite to the light source) ((2) exposure #1 (with PDMS and mask), (3) exposure #2, no mask). FIG. 8C-2 illustrates surface features investigated in accordance with FIG. 8C-1.

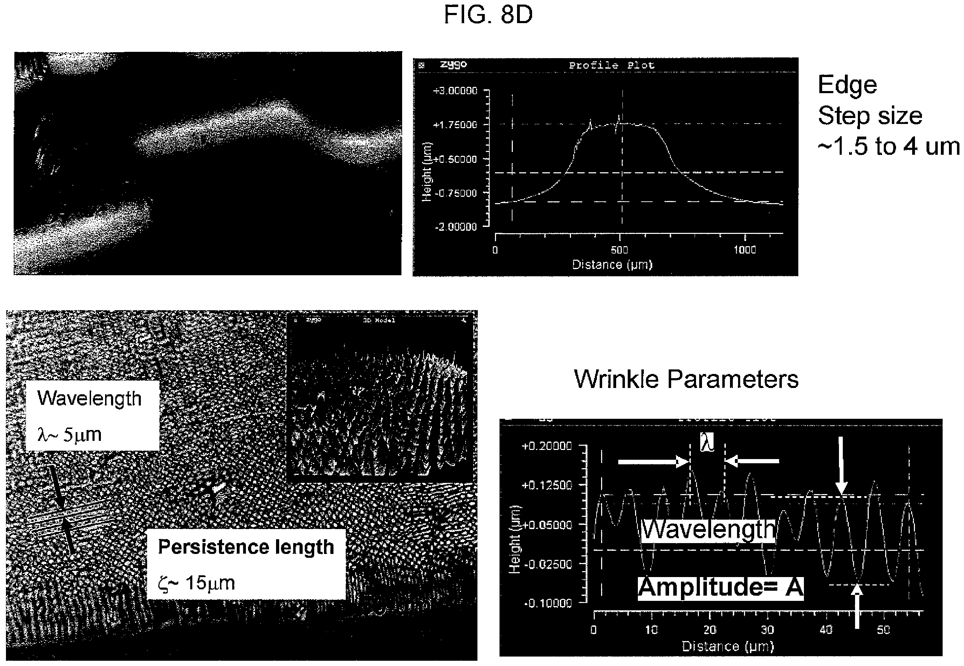

FIG. 8D illustrates definitions of topographic parameters.

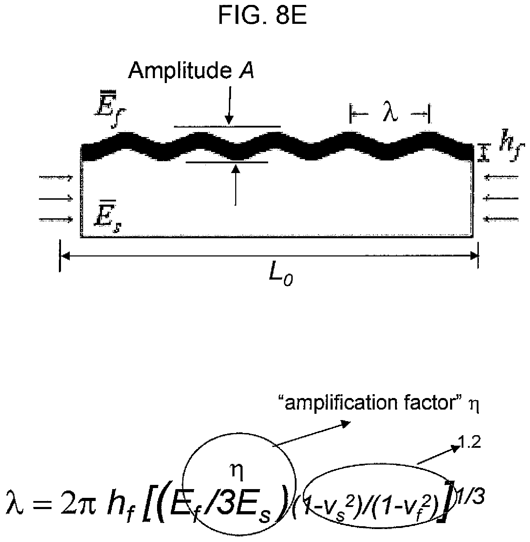

FIG. 8E illustrates the model described above, including an amplification factor.

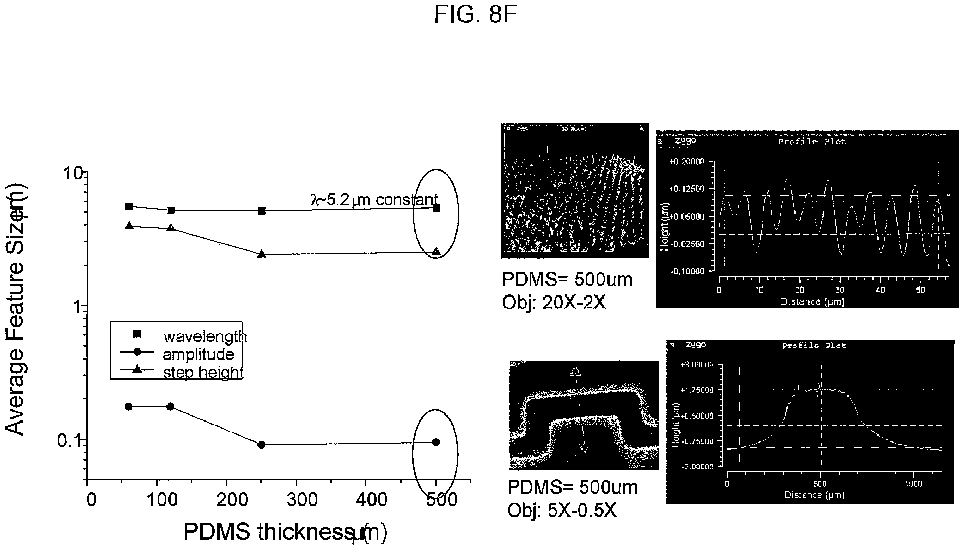

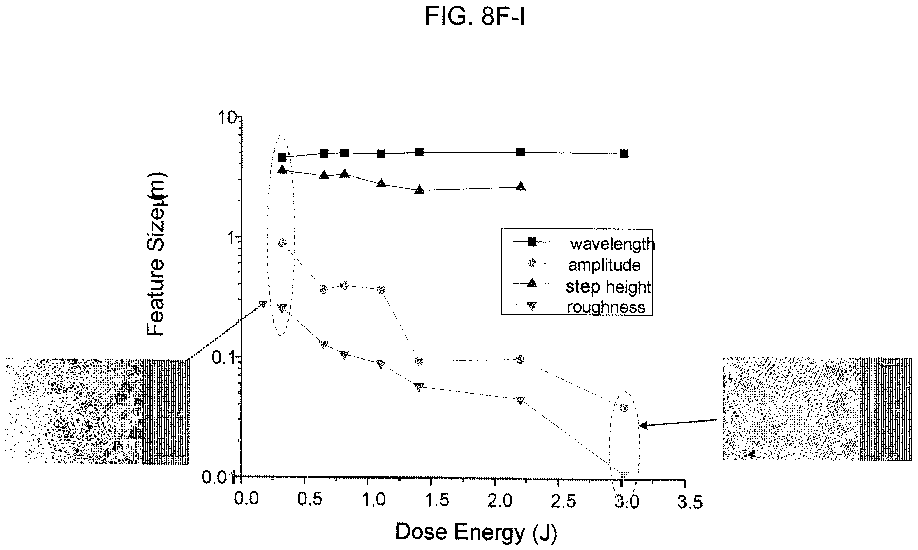

FIG. 8F illustrates a PDMS thickness effect on wrinkling (minor to negligible on all parameters). The PDMS thickness variation had a negligible effect on wrinkle wavelength. The wrinkle amplitude, and edge-step size appeared to decrease as PDMS thickened. Experimental parameters: Ormocomp: 250 µm; Xenon Lamp: 5.4 mW/cm²; exposure: masked 120 s + unmasked 120 s; energy ∼ 0.7 J + 0.7 J = 1.4 J.

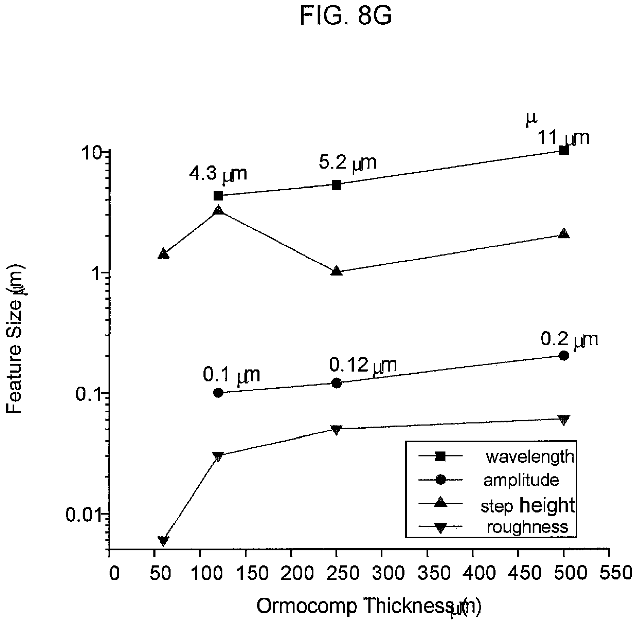

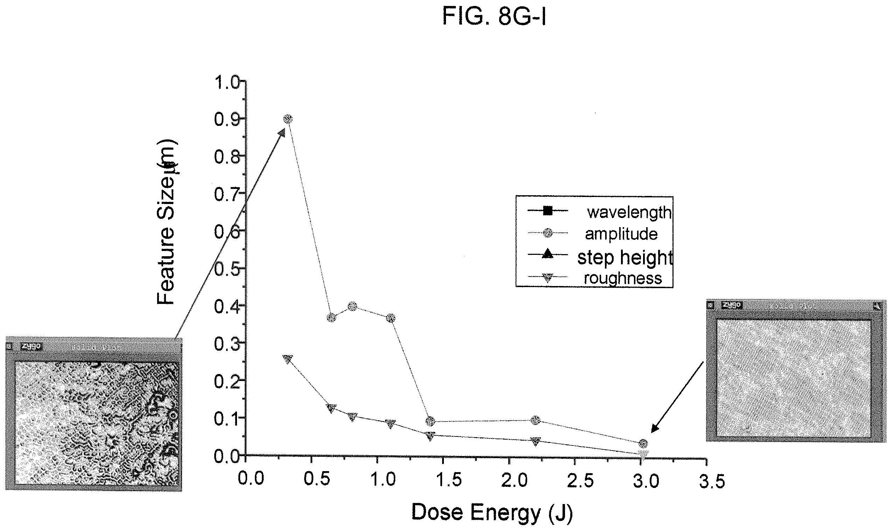

FIG. 8G illustrates effects of varying thickness of Ormocomp (PDMS: 500 µm). As indicated in FIG. 8G, wavelength, amplitude, and roughness increased with Ormocomp thickness; wrinkles were negligible for 60 mm Ormocomp.

FIG. 8F-I illustrates effects of time exposure at constant power (effect of total energy (50/50 masked/unmasked), dose controlled by exposure time). As indicated in FIG. 8F-I, the roughness (wrinkling amplitude) was largest at the shortest exposures, the wavelength was constant, and the step size decreased.

FIG. 8G-I illustrates effects of time exposure at constant power (effect of total energy (50/50 masked unmasked), dose controlled by exposure time). As indicated in FIG. 8G-I, the amplitude and roughness (shown on a linear scale) suggested a kinetic exponential decay.

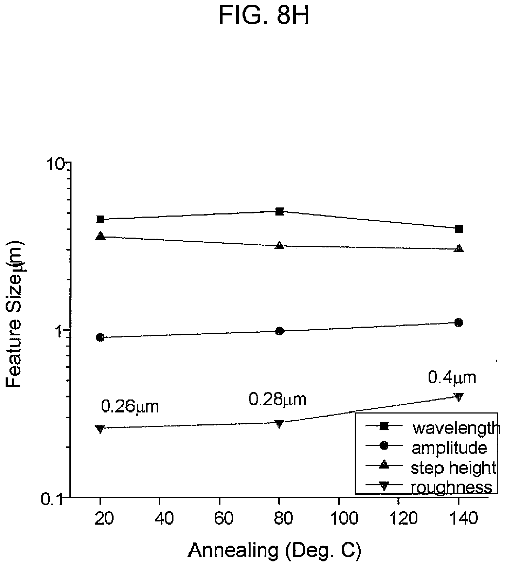

FIG. 8H illustrates annealing effects. As indicated in FIG. 8G-I, the annealing effects of samples initially exposed to a low UV dose (0.3 J) may be used to generate a modest increase in amplitude.

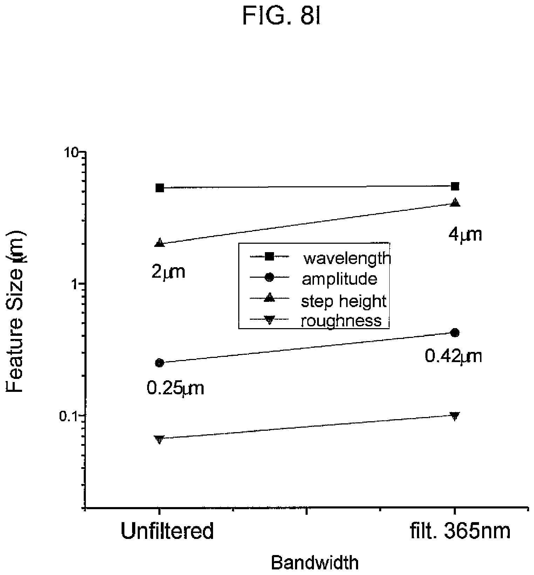

FIG. 8I illustrates UV filtering effects, which may be used to generate a 2X increase in amplitude. In FIG. 8I, a noticeable increase in amplitude, roughness and step size was achieved with a narrow 360 nm filter. No change in feature wavelength (5.2 to 5.4 mm) occurred. Note that a 15X decrease in power occurred due to the filter (Xenon lamp). A long exposure time was used to compensate for power differences. At the unfiltered points, the illumination was 240 s at 5.7 mW/cm². At the filtered points, the illumination was 3,700 s at 0.37 mW/cm².

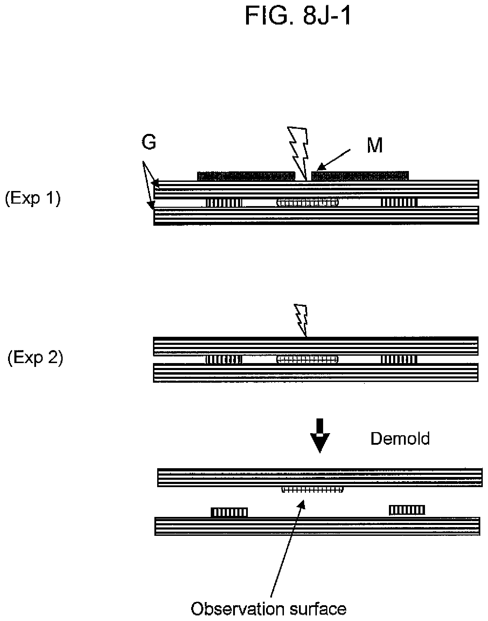

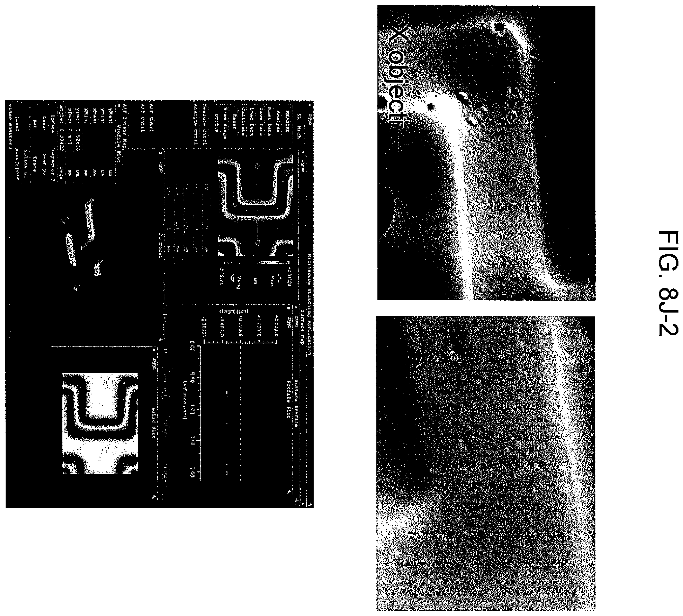

FIGS. 8J-1 and 8J-2 illustrate formation of a pattern without a PDMS compliant layer. In FIG. 8J-1, 'Exp 1' indicates exposure #1, with a mask and without PDMS, and 'Exp 2' indicates exposure #2, without a mask. Illumination was an argon light, ∼14.7 mW/cm² (@365 nm), total dose 3 J. The bottom surface of the resin (Ormocomp) was observed. 'G' indicates glass substrates, and 'M' indicates the mask. FIG. 8J-2 indicates a step of ∼1.5 - 2.0 µm created by the mask edge (nearly unwrinkled pattern).

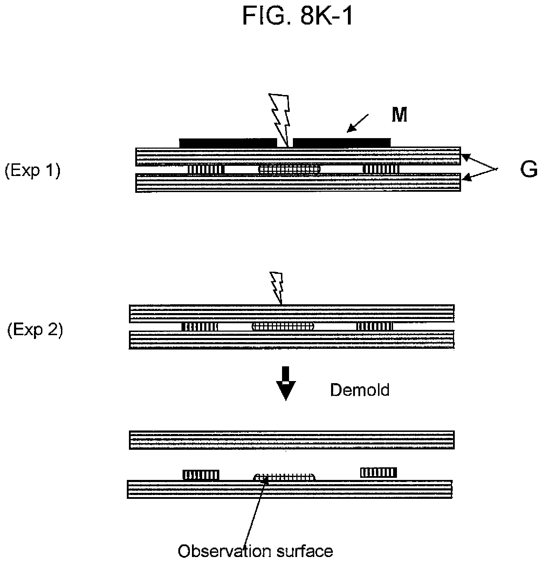

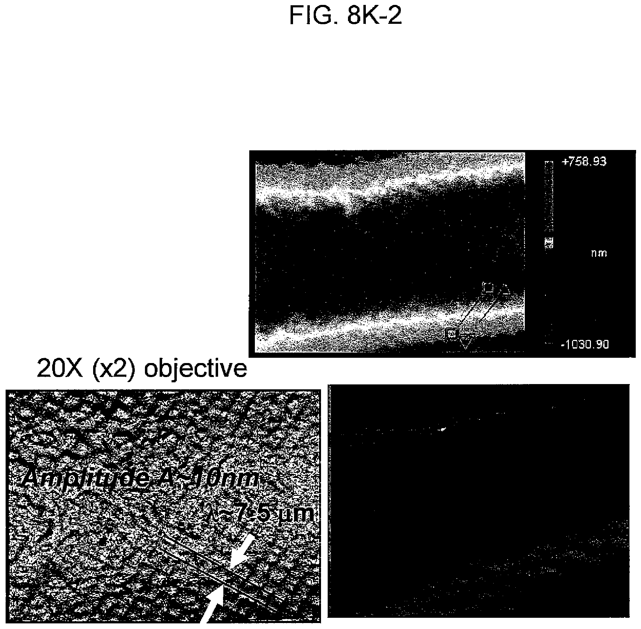

FIGS. 8K-1 and 8K-2 illustrate a closer look at the no PDMS example, Referring to FIG. 8K, very shallow wrinkle formation could be seen on the "top face" of the resin (Ormocomp) (the bottom face was not investigated). Thus, in some implementations PDMS may not be necessary for the formation of a pattern.

FIGS. 8L-1 and 8L-2 illustrate effects of the position of PDMS on formation of surface features (PDMS on bottom and PDMS on top, respectively). As indicated in FIGS. 8L-1 and 8L-2, wrinkling could be induced in the photopolymerizable material (Ormocomp) by changing the position of the PDMS substrate. No wrinkles were observed for the case where PDMS was on top.

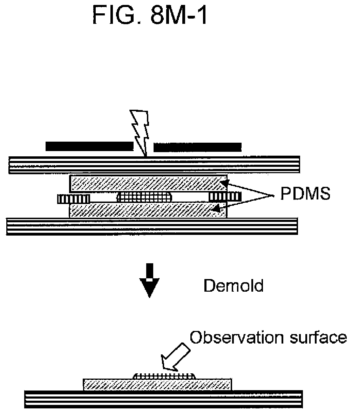

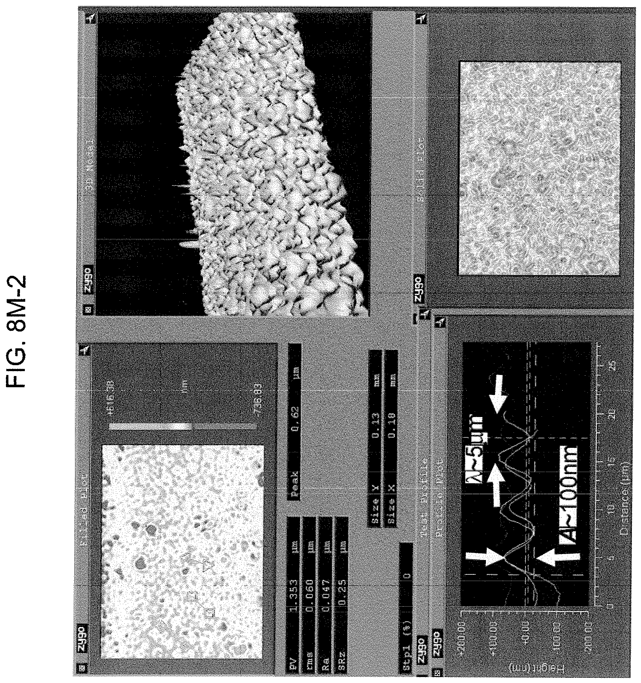

FIGS. 8M-1 and 8M-2 illustrate effects of having PDMS on two sides. Referring to FIG. 8M-2, less-ordered wrinkles were formed. The top layer did not have the same effect as a diffuser. In FIGS. 8M-1 and 8M-2, the bottom face was not investigated.

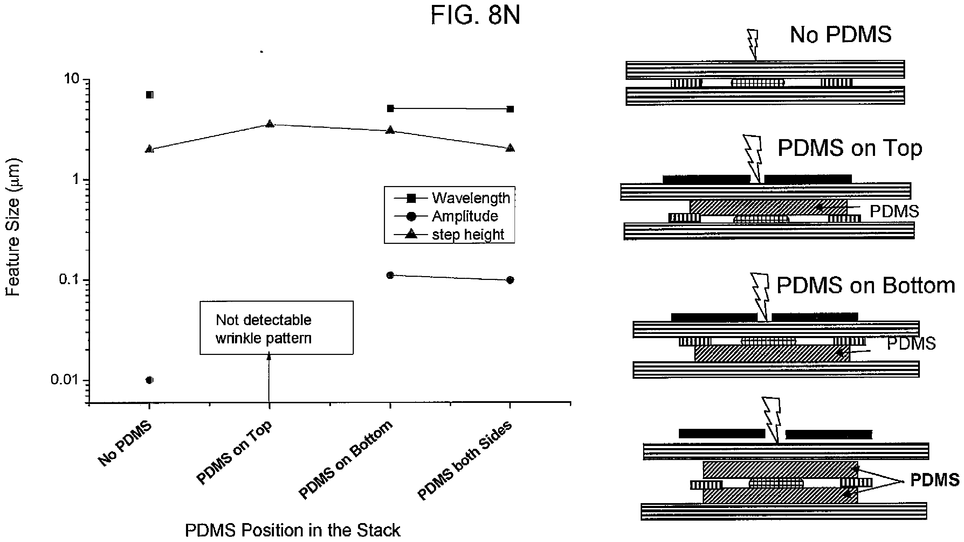

FIG. 8N illustrates effects of PDMS placement on formation of surface features in a photopolymerizable material (Ormocomp). As indicated in FIG. 8N, there was a top-bottom effect on the formation of the surface features; the results suggest that wrinkles were templated by the material characteristics downstream of the collimated light source.

FIGS. 8O-1 and 8O-2 illustrate effects of diffuser placement, where the diffuser was 2.7 mm above the photopolymerizable material (Ormocomp). In the example, the diffuser surface was kept right on top of the mask. The spacer thickness was 250 µm. PDMS was 500 µm, Ormocomp was 250 µm, and the exposure was 1.4 J using a Xenon lamp with no filter. Mask thickness was 120 µm. The uppermost glass G-I (closest to the light source) was 1.6 mm thick; the glass G-II contacting the upper surface (i.e., surface proximate the light source) of the photopolymerizable material was 1 mm thick.

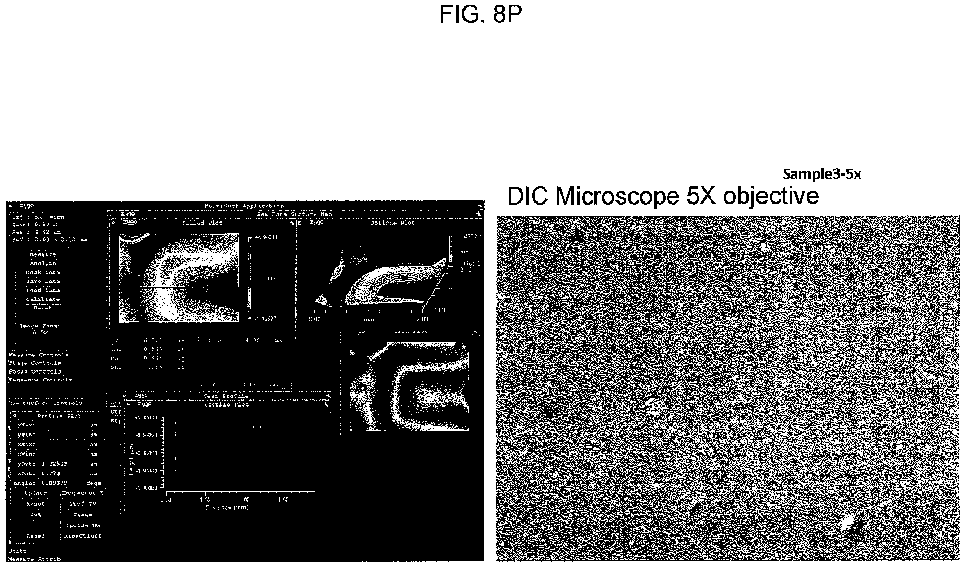

FIG. 8P illustrates effects of diffuser placement, where the diffuser was 15.7 mm above the photopolymerizable material (Ormocomp). In FIG. 8P, no wrinkles were observed; it was difficult to find any pattern using a microscope.

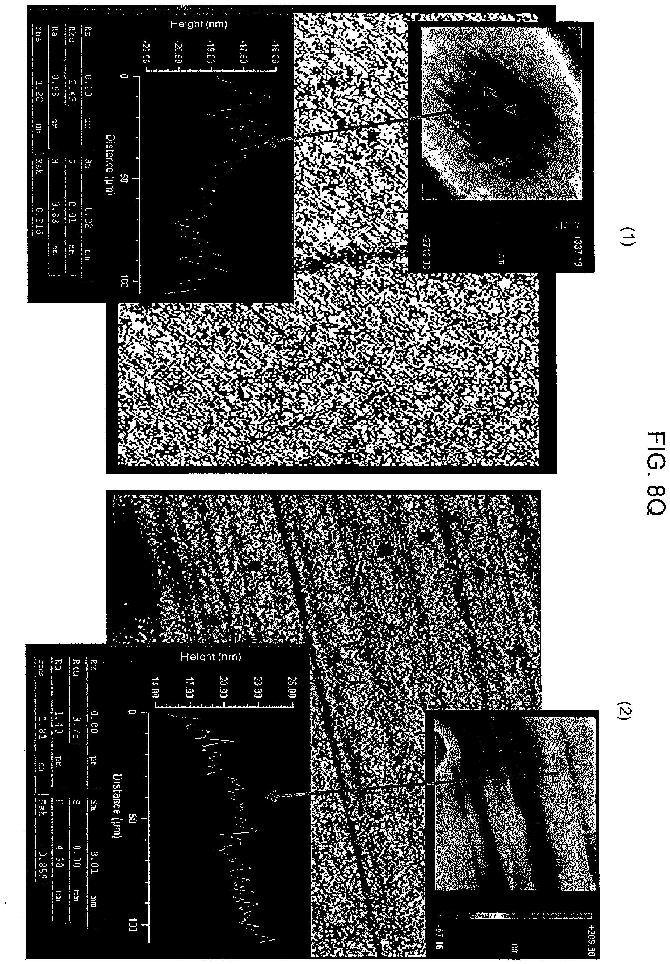

FIG. 8Q illustrates effects of formation of surface features on a photopolymerizable material (Ormocomp). In FIG. 8Q, illumination was a Xenon lamp at 10 mW/cm². The left-hand image (1) in FIG. 8Q illustrates a "down" case with a diffuser, and the right-hand image (2) illustrates an "up" case with no diffuser.

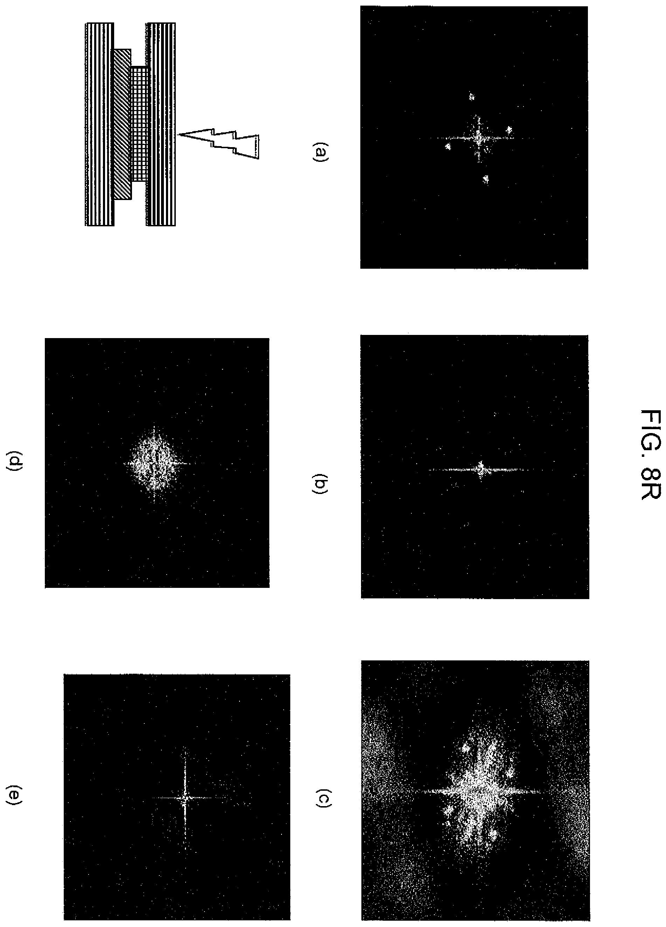

FIG. 8R illustrates fast fourier transform (FFT) of surfaces generated without a diffuser (Xenon lamp), with PDMS on the bottom ("down"). In FIG. 8R, (a) is Ormocomp, 20 mW/cm², (b) is Ormocomp, 10 mW/cm², (c) is Ormocomp, 5 mW/cm², (d) is CPS2, 10 mW/cm², and e is LCVGA, 10 mW/cm².

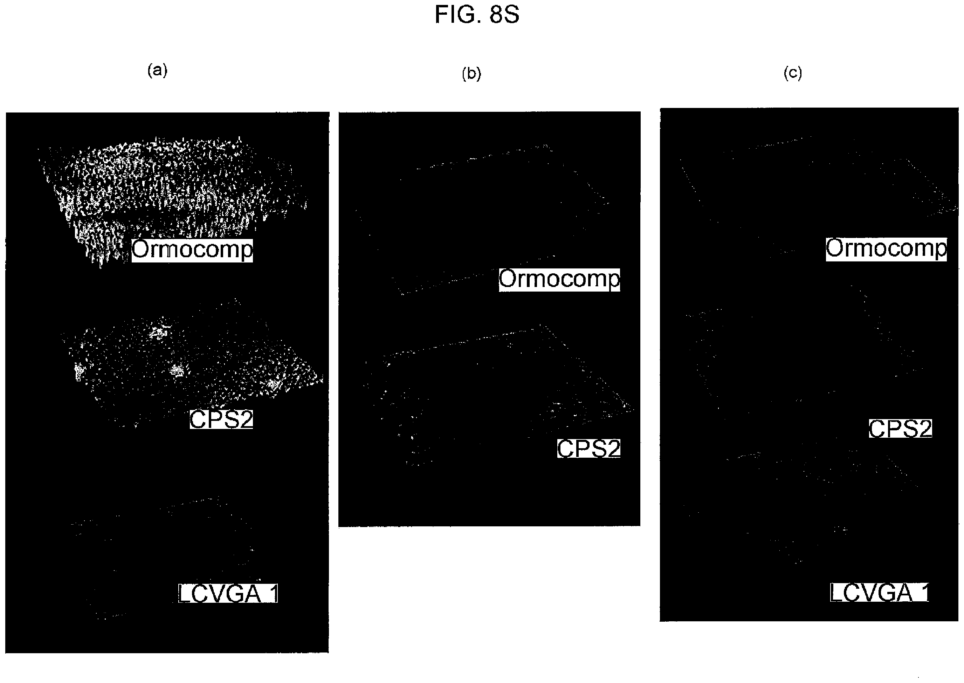

FIG. 8S illustrates formation of surface features (orange skin) using acrylates Ormocomp, CPS2, and LCVGA. In (a), the compliant substrate was on the bottom ("down") and no diffuser was used; in (b), the compliant substrate was on the bottom ("down") and a diffuser was used; in (c), the compliant substrate was on top ("up") and no diffuser was used. Illumination was Xenon lamp, 10 mW/cm².

In view of the above-described experiments, the step height formed by light "edges" was independent of substrate material, and appeared to be only a function of shrinkage of the photopolymerizable material (e.g., Ormocomp) during curing. Wrinkling amplitude, but not the frequency of the wrinkles, was templated by the material placed "downstream" of the photopolymerizable material. Top-placed (upstream) PDMS did not induce wrinkling. Further, the presence of shallow wrinkling was observed on glass-bound photopolymerizable material, with comparable frequency to PDMS-templated photopolymerizable material. This suggests that bottom-placed PDMS may deform passively under the wrinkling instabilities of the photopolymerizable material. Additionally, wrinkling amplitude was largest under early exposure, and decreased as exposure continued, perhaps as a result of further exposure completing the reaction. Low intensity collimated illumination (e.g., 0.5 mW/cm²) formed surface features of a larger amplitude than high intensity illumination (e.g., 5.5 mW/cm²). Wrinkling Amplitude may also be increased with increasing film thickness, but may be suppressed by removing collimation. The results suggest a pattern of top-to-bottom gradient formation in the photopolymerizable material properties under collimated light. This is consistent with "frontal or wavelike photopolymerization effects which, combined with strong dimensional changes (shrinkage), generate downstream stress instabilities in the photopolymerizable material films.

In the case that it is desired to suppress formation of surface features, one or more of the following conditions may be used: 1 - insert a diffuser in front of the wafer to "break" frontal polymerization; 2 - place the PDMS on the front surface relative to the photopolymerizable material; 3 - avoid mirror surfaces on the back of the photopolymerizable material, and/or use antireflection (AR) coatings (e.g., black Cr) on Cr patterns, 4 - minimize spatial light modulation in the XY plane (avoid sharp shadow edges); 5 - use stiffer stamper material, e.g., Ormostamp; 6 - use higher UV power, extend the polymerization dose towards > 3 J.; 7 - minimize photopolymerizable material thickness; 8 - reformulate the photopolymerizable material, e.g., by optimizing or lowering the photoinitiator concentration, explore methods (photochemical as well as resin composition) for reducing resin shrinkage.

Example embodiments have been disclosed herein, and although specific terms are employed, they are used and are to be interpreted in a generic and descriptive sense only and not for purpose of limitation. For example, embodiments may be used not only to address the reduction or elimination of roughness or patterns of films and lenses, but also to generate such patterns and roughness for desired effects, such as improved adhesion or data encryption. Rigid, elastomeric, and/or gas (air) substrates may be used. Further, a combination of these materials on composite molds is possible. Further, the use of reflective surfaces and patterned surfaces (e.g., shadow-masked) is possible. For example, the inclusion of a reflective surface, e.g., a chrome feature on a surface of the optical device being formed or on a surface of an adjacent substrate, may be used to provide reflected light in addition to the light directly incident from the light source. Further, single collimated beams at single angles may be used, or multiple sources of collimated light at different angles may be used. Further, convergent or divergent light beams may be used. Further, patterned light "filters" or photonic filters consisting of regions of diffuse light source areas, collimated areas, converging areas, etc., may be used.

## Claims

1. An apparatus for forming an optical device having a smooth surface, the apparatus comprising:
a first substrate (S1), the first substrate (S1) serving as a first surface for polymerization of a photopolymerizable material (R); and
a second substrate (S2), the second substrate (S2) being a compliant elastomer substrate with a low modulus from about 0.5 MPa to about 20 MPa and serving as a second surface for polymerization of the photopolymerizable material (R), the first substrate (S1) and the second substrate (S2) configured to be disposed opposite one another with the photopolymerizable material (R) therebetween and in contact therewith, **characterised in that**:
A) the first and second substrates (S1,S2) are disposed such that light from a light source (LS) is first incident on the first substrate (S1), and the apparatus further includes a diffuser (D) positioned between the light source (LS) and the first substrate (S1), or
B) the first and second substrates (S1,S2) are disposed such that light from a light source (LS) is first incident on the second substrate (S2), the second substrate (S2) receiving collimated light from the light source (LS)

2. The apparatus according to claim 1, wherein the first and second substrates are disposed such that light from a light source is first incident on the first substrate, and the apparatus further includes a diffuser positioned between the light source and the first substrate.

3. The apparatus according to claim 1, wherein the first and second substrates are disposed such that light from a light source is first incident on the second substrate, the second substrate receiving collimated light from the light source.

4. The apparatus according to any of the claims 2-3, wherein the first substrate is a compliant elastomer substrate with a low modulus of about 0.5 MPa to about 20 MPa.

5. The apparatus according to claim 3, wherein the first substrate is a rigid substrate having a modulus of greater than 100 MPa.

6. A method of forming an optical device having a smooth surface, the method comprising:
disposing a photopolymerizable material (R) between a first substrate (S1) and a second substrate (S2), the second substrate (S2) being a compliant elastomer substrate with a low modulus from about 0.5 MPa to about 20 MPa and serving as a second surface for polymerization of the photopolymerizable material (R), the first substrate (S1) and the second substrate (S2) being disposed opposite one another with the photopolymerizable material (R) therebetween and in contact therewith; and **characterised in**:
A) irradiating light from a light source (LS) on the photopolymerizable material (R) such that the light is first incident on the first substrate (S1) with a diffuser (D) being positioned between the light source (LS) and the first substrate (S1), or
B) irradiating light from a light source (LS) on the photopolymerizable material (R) such that the light is first incident on the second substrate (S2), the second substrate (S2) receiving collimated light from the light source (LS).

7. The method according to claim 6, wherein the light from the light source is irradiated on the photopolymerizable material such that the light is first incident on the first substrate with the diffuser being positioned between the light source and the first substrate.

8. The method according to claim 6, wherein the light from the light source is irradiated on the photopolymerizable material such that the light is first incident on the second substrate, the second substrate receiving collimated light from the light source.

9. The method according to any one of claims 6-8, wherein the first substrate is a rigid substrate having a modulus of greater than 100 MPa.

## Patentansprüche

1. Vorrichtung zur Bildung einer optischen Anordnung mit einer glatten Oberfläche, wobei die Vorrichtung umfasst:
ein erstes Substrat (S1), wobei das erste Substrat (S1) als eine erste Oberfläche für die Polymerisierung eines photopolymerisierbaren Materials (R) dient; und
ein zweites Substrat (S2), wobei das zweite Substrat (S2) ein konformes Elastomersubstrat mit einem niedrigen Modul von etwa 0,5 MPa bis etwa 20 MPa ist und als eine zweite Oberfläche für die Polymerisierung des photopolymerisierbaren Materials (R) dient, wobei das erste Substrat (S1) und das zweite Substrat (S2) ausgelegt sind, um einander entgegengesetzt mit dem photopolymerisierbaren Material (R) dazwischen und in Berührung damit angeordnet zu sein, **dadurch gekennzeichnet, dass**:
A) das erste und das zweite Substrat (S1,S2) derart angeordnet sind, dass Licht von einer Lichtquelle (LS) zunächst auf das erste Substrat (S1) einfällt, und die Vorrichtung ferner einen Diffusor (D) aufweist, der zwischen der Lichtquelle (LS) und dem ersten Substrat (S1) angeordnet ist, oder
B) das erste und das zweite Substrat (S1,S2) derart angeordnet sind, dass Licht von einer Lichtquelle (LS) zunächst auf das zweite Substrat (S2) einfällt, wobei das zweite Substrat (S2) kollimiertes Licht von der Lichtquelle (LS) empfängt.

2. Vorrichtung nach Anspruch 1, wobei das erste und das zweite Substrat derart angeordnet sind, dass Licht von einer Lichtquelle zunächst auf das erste Substrat einfällt, und die Vorrichtung ferner einen Diffusor aufweist, der zwischen der Lichtquelle und dem ersten Substrat angeordnet ist.

3. Vorrichtung nach Anspruch 1, wobei das erste und das zweite Substrat derart angeordnet sind, dass Licht von einer Lichtquelle zunächst auf das zweite Substrat einfällt, wobei das zweite Substrat kollimiertes Licht von der Lichtquelle empfängt.

4. Vorrichtung nach einem der Ansprüche 2-3, wobei das erste Substrat ein konformes Elastomersubstrat mit einem niedrigen Modul von etwa 0,5 MPa bis etwa 20 MPa ist.

5. Vorrichtung nach Anspruch 3, wobei das erste Substrat ein festes Substrat mit einem Modul höher als 100 MPa ist.

6. Verfahren zur Bildung einer optischen Anordnung mit einer glatten Oberfläche, wobei das Verfahren Folgendes umfasst:
Anordnen eines photopolymerisierbaren Materials (R) zwischen einem ersten Substrat (S1) und einem zweiten Substrat (S2), wobei das zweite Substrat (S2) ein konformes Elastomersubstrat mit einem niedrigen Modul von etwa 0,5 MPa bis etwa 20 MPa ist und als eine zweite Oberfläche für die Polymerisierung des photopolymerisierbaren Materials (R) dient, wobei das erste Substrat (S1) und das zweite Substrat (S2) einander entgegengesetzt mit dem photopolymerisierbaren Material (R) dazwischen und in Berührung damit angeordnet sind; und durch Folgendes gekennzeichnet:
A) Bestrahlung von Licht von einer Lichtquelle (LS) auf das photopolymerisierbare Material (R) derart, dass das Licht zunächst auf das erste Substrat (S1) einfällt, wobei ein Diffusor (D) zwischen der Lichtquelle (LS) und dem ersten Substrat (S1) angeordnet ist, oder
B) Bestrahlung von Licht von einer Lichtquelle (LS) auf das photopolymerisierbare Material (R) derart, dass das Licht zunächst auf das zweite Substrat (S2) einfällt, wobei das zweite Substrat (S2) kollimiertes Licht von der Lichtquelle (LS) empfängt.

7. Verfahren nach Anspruch 6, wobei das Licht von der ersten Lichtquelle auf das photopolymerisierbare Material derart bestrahlt wird, dass das Licht zunächst auf das erste Substrat einfällt, wobei der Diffusor zwischen der Lichtquelle und dem ersten Substrat angeordnet ist.

8. Verfahren nach Anspruch 6, wobei das Licht von der ersten Lichtquelle auf das photopolymerisierbare Material derart bestrahlt wird, dass das Licht zunächst auf das erste Substrat einfällt, wobei das zweite Substrat kollimiertes Licht von der Lichtquelle empfängt.

9. Vorrichtung nach einem der Ansprüche 6-8, wobei das erste Substrat ein festes Substrat mit einem Modul höher als 100 MPa ist.

## Revendications

1. Appareil pour former un dispositif optique ayant une surface lisse, l'appareil comprenant :
un premier substrat (S1), le premier substrat (S1) servant de première surface pour la polymérisation d'un matériau photopolymérisable (R) ; et
un deuxième substrat (S2), le deuxième substrat (S2) étant un substrat élastomère flexible avec un module inférieur d'environ 0,5 MPa à environ 20 MPa et servant de deuxième surface pour la polymérisation du matériau photopolymérisable (R), le premier substrat (S1) et le deuxième substrat (S2) étant configurés pour être disposés en face l'un de l'autre avec le matériau photopolymérisable (R) entre eux et en contact avec celui-ci, **caractérisé en ce que** :
A) les premier et deuxième substrats (S1,S2) sont disposés de sorte que la lumière provenant d'une source de lumière (LS) soit d'abord incidente sur le premier substrat (S1), et l'appareil comprend en outre un diffuseur (D) positionné entre la source de lumière (LS) et le premier substrat (S1), ou
B) les premier et deuxième substrats (S1,S2) sont disposés de sorte que la lumière provenant d'une source de lumière (LS) soit d'abord incidente sur le deuxième substrat (S2), le deuxième substrat (S2) recevant de la lumière collimatée provenant de la source de lumière (LS).

2. Appareil selon la revendication 1, dans lequel les premier et deuxième substrats sont disposés de sorte que la lumière provenant d'une source de lumière soit d'abord incidente sur le premier substrat, et l'appareil comprend en outre un diffuseur (D) positionné entre la source de lumière et le premier substrat.

3. Appareil selon la revendication 1, dans lequel les premier et deuxième substrats sont disposés de sorte que la lumière provenant d'une source de lumière soit d'abord incidente sur le deuxième substrat, le deuxième substrat recevant de la lumière collimatée provenant de la source de lumière.

4. Appareil selon l'une quelconque des revendications 2 à 3, dans lequel le premier substrat est un substrat élastomère flexible avec un module inférieur d'environ 0,5 MPa à environ 20 MPa.

5. Appareil selon la revendication 3, dans lequel le premier substrat est un substrat rigide ayant un module supérieur à 100 MPa.

6. Procédé de formation d'un dispositif optique ayant une surface lisse, le procédé comprenant les étapes consistant à :
disposer un matériau photopolymérisable (R) entre un premier substrat (S1) et un deuxième substrat (S2), le deuxième substrat (S2) étant un substrat élastomère flexible avec un module inférieur d'environ 0,5 MPa à environ 20 MPa et servant de deuxième surface pour la polymérisation du matériau photopolymérisable (R), le premier substrat (S1) et le deuxième substrat (S2) étant configurés pour être disposés en face l'un de l'autre avec le matériau photopolymérisable (R) entre eux et en contact avec celui-ci, **caractérisé en ce que** :
A) irradier la lumière provenant d'une source de lumière (LS) sur le matériau photopolymérisable (R) de sorte que la lumière soit d'abord incidente sur le premier substrat (S1) avec un diffuseur (D) étant positionné entre la source de lumière (LS) et le premier substrat (S1), ou
B) irradier la lumière provenant d'une source de lumière (LS) sur le matériau photopolymérisable (R) de sorte que la lumière soit d'abord incidente sur le deuxième substrat (S2), le deuxième substrat (S2) recevant de la lumière collimatée provenant de la source de lumière (LS).

7. Procédé selon la revendication 6, dans lequel la lumière provenant de la source de lumière est irradiée sur le matériau photopolymérisable de sorte que la lumière soit d'abord incidente sur le premier substrat avec un diffuseur étant positionné entre la source de lumière et le premier substrat.

8. Procédé selon la revendication 6, dans lequel la lumière provenant de la source de lumière est irradiée sur le matériau photopolymérisable de sorte que la lumière soit d'abord incidente sur le deuxième substrat, le deuxième substrat recevant de la lumière collimatée provenant de la source de lumière.

9. Procédé selon l'une quelconque des revendications 6 à 8, dans lequel le premier substrat est un substrat rigide ayant un module supérieur à 100 MPa.
